# DEMANDE DE BREVET EUROPEEN

(11) **EP 3 627 680 A1**
(43) Date de publication de la demande: **25.03.2020**
(21) Numéro de dépôt: 19196445.1
(22) Date de dépôt: 10.09.2019
(51) Int. Cl.: H02M 3/156

(54) **PROCÉDÉ DE RÉGLAGE D'UN SIGNAL DE MODULATION DE LARGEUR D'IMPULSION PILOTANT UN RÉGULATEUR DE TENSION À DÉCOUPAGE DU TYPE ABAISSEUR DE TENSION, ET DISPOSITIF CORRESPONDANT**

(30) Priorité: 24.09.2018 FR 1858655
(71) Demandeur: STMicroelectronics (Grenoble 2) SAS, 38000 Grenoble (FR)
(72) Inventeur: CHESNEAU, David, 38140 RENAGE (FR); AMIARD, François, 38120 PROVEYSIEUX (FR); ESCH, Hélène, 38170 SEYSSINET PARISET (FR)
(74) Mandataire: Casalonga

(57) **Abrégé**

Le procédé de réglage d'un signal de modulation de largeur d'impulsion (Spwm) destiné à piloter un régulateur de tension à découpage du type abaisseur de tension (19), comprend
une comparaison entre une tension d'entrée (Vin) dudit régulateur de tension à découpage (19) et une tension de seuil (VTH), et
une diminution de la fréquence dudit signal de modulation de largeur d'impulsion (Spwm) si la tension d'entrée (Vin) est inférieure à la tension de seuil (VTH).

## Description

Des modes de mise en oeuvre et de réalisation de l'invention concernent les sources d'alimentation à découpage (« Switch Mode Power Supply » : SMPS en langue anglaise), plus particulièrement les sources d'alimentation à découpage du type abaisseur de tension (du type « BUCK » en langue anglaise), pilotées par des signaux de modulation de largeur d'impulsion (« Pulse Width Modulation » : PWM en langue anglaise).

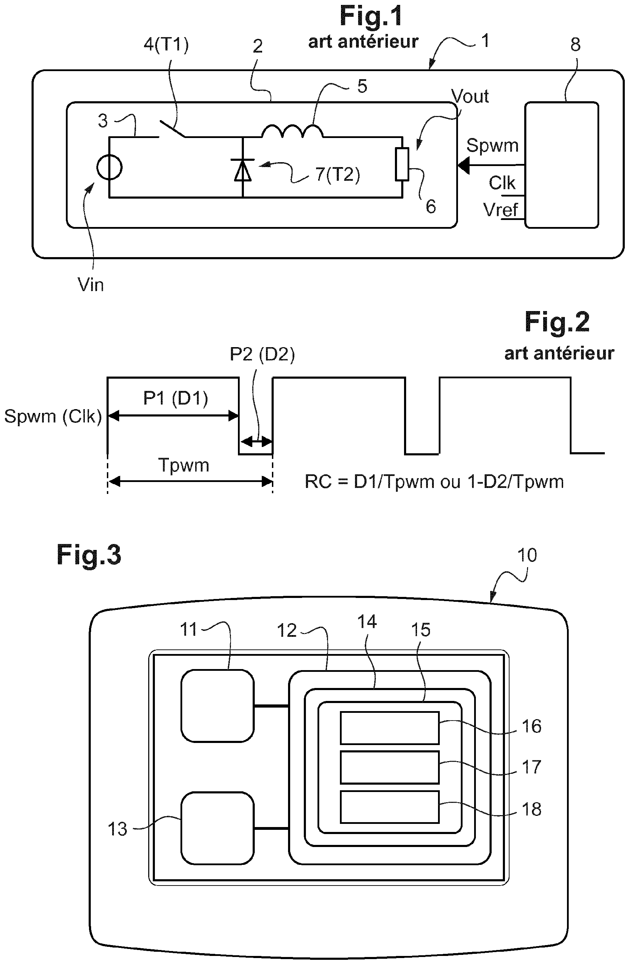

D'une façon générale, une source d'alimentation à découpage classique du type abaisseur de tension 1 comporte, comme illustré sur la figure 1, un circuit de régulation, ou régulateur, de tension 2 comportant une entrée 3 destinée à recevoir une tension d'entrée Vin, un commutateur de puissance 4 ayant un état fermé et un état ouvert, une inductance 5 configurée pour stocker de l'énergie, une charge 6, et une diode 7.

Le circuit de régulation de tension 2 est configuré pour délivrer sur la charge une tension de sortie Vout plus faible que la tension d'entrée Vin.

Lorsque le commutateur de puissance 4 est dans l'état fermé, la diode 7 est dans l'état bloqué et le courant traversant l'inductance 5 augmente.

Lorsque le commutateur de puissance 4 est dans l'état ouvert, la diode 7 est dans l'état passant et le courant traversant l'inductance 5 décroît.

Le commutateur de puissance 4 et la diode 7 sont généralement réalisés par des transistors, ici par exemple par un premier transistor T1 et un deuxième transistor T2.

L'état fermé/ouvert du premier transistor T1 et l'état passant/bloqué du deuxième transistor T2 sont pilotés par un signal de modulation de largeur d'impulsion Spwm délivré par un circuit de contrôle 8 de la source d'alimentation à découpage 1.

Le circuit de contrôle 8 est destiné à recevoir une tension de référence Vref pour fixer la tension de sortie Vout du régulateur de tension 2 via le signal de modulation de largeur d'impulsion Spwm.

La fréquence ou la période du signal Spwm est généralement imposée par un signal d'horloge Clk.

Comme illustré sur la figure 2, chaque période Tpwm du signal Spwm comporte
une première phase P1 ayant une durée D1 dans laquelle le commutateur de puissance 4 est dans l'état fermé et la diode 7 est dans l'état bloqué, et
une deuxième phase P2 ayant une durée D2 dans laquelle le commutateur de puissance 4 est dans l'état ouvert et la diode 7 est dans l'état passant.

Le rapport cyclique RC du signal Spwm est égal à D1/Tpwm ou 1-D2/Tpwm et ce rapport cyclique RC est variable en fonction des tensions d'entrée Vin et de sortie Vout.

Lorsqu'il n'existe qu'une faible chute de tension, par exemple inférieure à 0,4 V, entre les tensions d'entrée Vin et de sortie Vout. La source d'alimentation à découpage fonctionne dans un mode de faible chute de tension (« Low Dropout » : en langue anglaise).

Dans ce cas là, ledit rapport cyclique RC du signal Spwm reste élevé, c'est-à-dire proche de 100%, de façon à maintenir la fonctionnalité de la source d'alimentation à découpage du type abaisseur de tension.

Cependant, comme le circuit de contrôle 8 possède toujours une latence intrinsèque pour générer le signal Spwm, la durée D2 de la deuxième phase P2 ne peut donc pas être complètement éliminée. De ce fait, le rapport cyclique du signal Spwm est limité par ladite latence et ne peux pas atteindre 100%.

Une solution classique propose de limiter la tension d'entrée Vin d'une source d'alimentation à découpage du type abaisseur de tension de façon à éviter la contrainte d'un rapport cyclique élevé.

Pourtant, une telle solution limite largement la gamme de fonctionnement de ladite source d'alimentation.

Il existe également une autre solution classique qui cherche à réduire la latence intrinsèque du circuit de contrôle 8 de façon à augmenter ledit rapport cyclique.

Néanmoins, une légère amélioration sur le rapport cyclique RC est obtenue au prix d'une forte complexité, et d'une surface de silicium et d'une consommation largement augmentées.

Il existe ainsi un besoin de proposer une solution technique à faible complexité, faible consommation et à faible empreinte en silicium permettant d'augmenter le rapport cyclique du signal de modulation de largeur d'impulsion, autrement dit la performance de la source d'alimentation à découpage du type abaisseur de tension sans limiter sa gamme de fonctionnement.

Selon un aspect, il est proposé un procédé de réglage d'un signal de modulation de largeur d'impulsion destiné à piloter un régulateur de tension à découpage du type abaisseur de tension, comprenant
une comparaison entre une tension d'entrée dudit régulateur de tension à découpage et une tension de seuil, et
une diminution de la fréquence dudit signal de modulation de largeur d'impulsion si la tension d'entrée est inférieure à la tension de seuil.

Un tel procédé permet avantageusement un réglage, en fonction de la tension d'entrée du régulateur de tension, du rapport cyclique du signal de modulation de largeur d'impulsion par une simple diminution de sa fréquence.

Une telle diminution de la fréquence du signal de modulation de largeur d'impulsion conduit simultanément à une augmentation de la période du signal de modulation de largeur d'impulsion, ce qui augmente avantageusement l'ondulation (« ripple » en anglais) du courant traversant l'inductance de puissance du régulateur de tension à découpage de façon à faire répondre le régulateur de tension plus rapidement à une variation de sa charge.

En effet, comme expliqué ci-avant, la durée D2 de la deuxième phase P2 de ladite période Tpwm est fixée par des caractéristiques intrinsèques du circuit de contrôle délivrant le signal de modulation de largeur d'impulsion.

Et, comme indiqué ci-avant, le rapport cyclique du signal de modulation de largeur d'impulsion est égal à D1/Tpwm ou 1-D2/Tpwm.

Et si l'on considère la valeur D2 minimale fixe, car définie par les caractéristiques intrinsèques du circuit de contrôle, l'augmentation de la période Tpwm du signal de modulation de largeur d'impulsion permet d'augmenter directement le rapport cyclique maximal du signal de modulation de largeur d'impulsion de façon à augmenter la performance du régulateur de tension à découpage du type abaisseur de tension en cas de nécessité.

Selon un mode de mise en oeuvre, ladite diminution de la fréquence du signal de modulation de largeur d'impulsion comprend une diminution de la fréquence d'un signal d'horloge destiné à cadencer le signal de modulation de largeur d'impulsion.

Avantageusement, une telle diminution de la fréquence d'un signal d'horloge offre une solution technique à fable complexité, à faible consommation, et peu encombrante au niveau de la surface de silicium.

A titre d'exemple non limitatif, ladite diminution est une division de la fréquence dudit signal d'horloge par deux.

La tension de seuil peut par exemple être choisie de façon à ce que lorsque la tension d'entrée est inférieure à la tension de seuil, le régulateur fonctionne dans un mode à faible chute de tension (« Low Dropout » en langue anglaise).

L'homme du métier saura choisir cette tension de seuil en fonction notamment de l'application envisagée et/ou de la technologie utilisée.

A titre d'exemple non limitatif on peut choisir une valeur de l'ordre de 2,2 V pour la tension de seuil.

Un tel procédé permet ainsi avantageusement d'ajuster le rapport cyclique du signal de modulation de largeur d'impulsion lorsque le régulateur de tension à découpage du type abaisseur de tension est en mode de régulation de tension à faible chute de façon à améliorer dynamiquement la performance dudit régulateur.

Selon un autre aspect, il est proposé un dispositif de réglage de d'un signal de modulation de largeur d'impulsion destiné à piloter un régulateur de tension à découpage du type abaisseur de tension. Ce dispositif comprend
un module de comparaison destiné à recevoir une tension d'entrée dudit régulateur de tension à découpage et une tension de seuil, et configuré pour comparer ladite tension d'entrée et ladite tension de seuil, et
un module de contrôle destiné à diminuer la fréquence dudit signal de modulation de largeur d'impulsion si la tension d'entrée est inférieure à la tension de seuil.

Selon un mode de réalisation, le module de contrôle est configuré pour diminuer la fréquence du signal de modulation de largeur d'impulsion par une division d'un signal d'horloge destiné à cadencer ledit signal de modulation de largeur d'impulsion.

Selon un mode de réalisation, le module de contrôle est configuré pour diminuer la fréquence du signal de modulation de largeur d'impulsion par une division de la fréquence dudit signal d'horloge par deux.

Comme indiqué ci-avant, à titre indicatif mais non limitatif, la tension de seuil peut être choisie de façon à ce que lorsque la tension d'entrée est inférieure à la tension de seuil, le régulateur de tension fonctionne dans un mode à faible chute de tension.

Selon un autre aspect, il est proposé une source d'alimentation à découpage du type abaisseur de tension comprenant un dispositif de réglage d'un signal de modulation de largeur d'impulsion tel que défini ci-avant et un régulateur de tension à découpage du type abaisseur de tension piloté par ledit signal de modulation de largeur d'impulsion.

Selon un autre aspect, il est proposé une unité de gestion d'alimentation, comprenant au moins une source d'alimentation à découpage du type abaisseur de tension tel que défini ci-avant.

Selon encore un autre aspect, il est proposé un microcontrôleur incorporant une unité de gestion de l'alimentation telle que définie ci-dessus.

Selon toujours un autre aspect, il est proposé un appareil électronique tel qu'un objet connecté, incorporant au moins un microcontrôleur tel que défini ci-dessus.

D'autres avantages et caractéristiques de l'invention apparaîtront à l'examen de la description détaillée de modes de mise en oeuvre et de réalisation nullement limitatifs, et des dessins annexés, sur lesquels :
- les figures 1 et 2 illustrent un art antérieur, et
- les figures 3 à 5 illustrent schématiquement des modes de mise en oeuvre et de réalisation de l'invention.

La référence 10 sur la figure 3 désigne un appareil électronique, ici par exemple un appareil intelligent connecté du type thermostat connecté 10.

Le thermostat connecté 10 comprend
un module de détection 11 configuré pour détecter des paramètres ambiants, tels que la température ambiante et l'humidité ambiante autour du thermostat 10,
un module de traitement 12 couplé au module de détection 11 et configuré pour traiter des paramètres détectés par le module de détection 11, et
un module de communication 13 couplé au module de traitement 12 et configuré pour communiquer avec un autre objet connecté ou un serveur informatique via un réseau internet.

Le module de traitement 12 comporte un microcontrôleur 14, ici par exemple un microcontrôleur du type STM32® commercialisé par la société STMicroelectronics®.

Le microcontrôleur 14 comporte une unité de gestion d'alimentation 15 configurée pour gérer dynamiquement diverses sources d'alimentation et comportant au moins un oscillateur 16, un automate à un nombre fini d'états 17 (« Finite State Machine » : FSM en langue anglaise), et au moins une source d'alimentation à découpage 18 configurée pour délivrer une ou des tensions d'alimentation internes stables.

A des fins de simplification, on n'illustre ici par exemple qu'une source d'alimentation à découpage 18 du type abaisseur de tension (« BUCK » en anglais) 18.

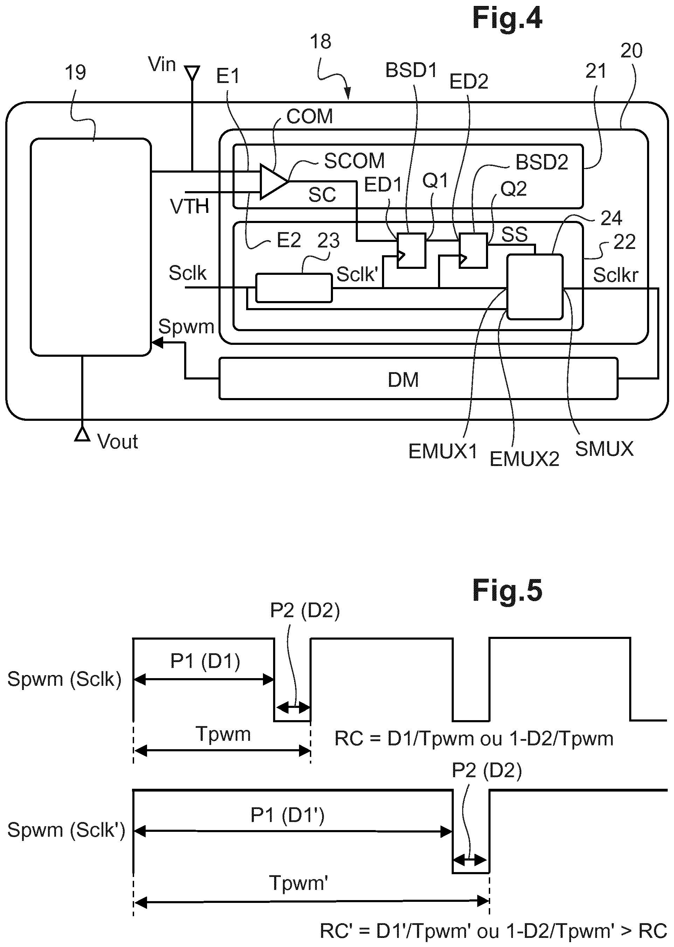

On se réfère maintenant à la figure 4 pour illustrer plus en détails ladite source d'alimentation à découpage 18. Celle-ci comprend :
un régulateur de tension à découpage du type abaisseur de tension 19 destiné à recevoir une tension d'entrée Vin et configuré pour délivrer une tension de sortie Vout plus faible que la tension d'entrée Vin, et
un dispositif de réglage 20 configuré pour délivrer au régulateur de tension à découpage 19 un signal de modulation de largeur d'impulsion Spwm de façon à piloter le régulateur de tension à découpage 19.

Le régulateur de tension à découpage 19 peut être de toute structure classique et connue et par exemple de celui illustré sur la figure 1.

Le dispositif de réglage 20 comporte un module de comparaison 21 et un module de contrôle comportant un circuit 22 et un bloc DM.

Le module de comparaison 21 comporte un comparateur COM dont la première entrée E1 est destinée à recevoir la tension d'entrée Vin du dudit régulateur de tension à découpage 19 et dont la deuxième entrée E2 est destinée à recevoir une tension de seuil VTH.

Le module de comparaison 21 est configuré pour délivrer à sa sortie SCOM un signal de comparaison SC en fonction de la tension d'entrée Vin et de la tension de seuil VTH.

Le signal de comparaison SC est dans un premier état, par exemple l'état haut, lorsque la tension d'entrée Vin est inférieure à la tension de seuil et le signal de comparaison SC est dans un deuxième état, par exemple l'état bas, dans les autres cas.

La tension de seuil VTH est choisie pour que la source d'alimentation à découpage 18 soit en mode de régulation de tension à faible chute lorsque la tension d'entrée Vin est inférieure à cette tension de seuil VTH, qui est dans cet exemple sensiblement égale à 2,2V.

Le module de contrôle 22, DM est destiné à recevoir un signal d'horloge Sclk et configuré pour générer ledit signal de modulation de largeur d'impulsion Spwm cadencé par ledit signal d'horloge Sclk.

Le circuit 22 comporte un diviseur de fréquence 23 connu en soi et configuré pour diminuer la fréquence dudit signal d'horloge Sclk.

A titre d'exemple, le diviseur de fréquence 23 est configuré pour délivrer un signal d'horloge modifié Sclk' dont la fréquence est la moitié de celle dudit signal d'horloge Sclk.

Le circuit 22 comporte également
une première bascule (« flip-flop » en langue anglaise) synchrone du type D BSD1 dont l'entrée de données ED1 est destinée à recevoir le signal de comparaison SC, et
une deuxième bascule synchrone du type D BSD2 dont l'entrée de données ED2 est couplée à la sortie de données Q1 de la première bascule BSD1.

Les première et deuxième bascules synchrones BSD1 et BSD2 sont cadencées par le signal d'horloge modifié Sclk'.

La deuxième bascule synchrone BSD2 est configurée pour délivrer à sa sortie Q2 un signal de sélection SS représentatif du signal de comparaison SC.

Il convient de noter que l'utilisation d'une cascade de deux bascules BSD1, BSD2 permet avantageusement une réduction importante d'un risque de métastabilité, c'est-à-dire l'obtention à la sortie SCOM d'un signal de comparaison SC asynchrone par rapport au signal d'horloge modifié Sclk'.

Le circuit 22 comporte en outre un multiplexeur 24
dont la première entrée EMUX1 est destinée à recevoir le signal d'horloge Sclk,
dont la deuxième entrée EMUX2 est destinée à recevoir le signal d'horloge modifié Sclk', et
dont l'entrée de sélection est destinée à recevoir le signal de sélection SS.

Le multiplexeur 24 est configuré pour délivrer à sa sortie SMUX connectée au bloc DM, un signal d'horloge réglé Sclkr destiné à être utilisé pour cadencer le signal de modulation de largeur d'impulsion Spwm.

Lorsque la tension d'entrée Vin est inférieure à la tension de seuil VTH, le multiplexeur contrôlé par le signal de sélection SS représentatif du signal de comparaison SC sélectionne le signal d'horloge modifié Sclk' comme le signal d'horloge réglé Sclkr.

Sinon, le multiplexeur sélectionne le signal d'horloge Sclk comme le signal d'horloge réglé Sclkr.

Le bloc DM destiné à recevoir le signal d'horloge réglé Sclkr est configuré pour générer le signal de modulation de largeur d'impulsion Spwm à partir du signal d'horloge réglé Sclkr. Le bloc DM peut être de toute structure classique et connue.

La partie haute de la figure 5 illustre le cas où la tension d'entrée Vin est supérieure ou égale à la tension de seuil VTH.

Dans ce cas la période du signal de modulation de largeur d'impulsion Spwm est égale à Tpwm et le rapport cyclique RC vaut 1-D2/Tpwm, où D2 désigne la durée de la deuxième phase P2.

La partie basse de la figure 5 illustre le cas où la tension d'entrée Vin est inférieure à la tension de seuil VTH.

Dans ce cas, la fréquence du signal de modulation de largeur d'impulsion Spwm cadencé par le signal d'horloge modifié Sclk' est diminuée et la période Tpwm' du signal de modulation de largeur d'impulsion Spwm est donc augmentée par rapport à celle Tpwm du signal de modulation de largeur d'impulsion Spwm cadencé par le signal d'horloge Sclk.

En effet, la durée D2 de la deuxième phase P2 est fixe puisqu'elle est définie par les caractéristiques intrinsèques du module de contrôle et la durée D1' de la première phase P1 croît avec l'augmentation de la période Tpwm' le rapport cyclique RC' du signal de modulation de largeur d'impulsion Spwm cadencé par le signal d'horloge modifié Sclk' est par conséquent augmenté.

Ainsi, le rapport cyclique maximal du signal de modulation de largeur d'impulsion Spwm est augmenté de façon à améliorer la performance de la source d'alimentation à découpage du type abaisseur de tension 18 notamment lorsque ladite source 18 fonctionne en mode de régulation de tension à faible chute à cause de sa tension d'entrée Vin faible.

## Revendications

1. Procédé de réglage d'un signal de modulation de largeur d'impulsion (Spwm) destiné à piloter un régulateur de tension à découpage du type abaisseur de tension (19), comprenant
une comparaison entre une tension d'entrée (Vin) dudit régulateur de tension à découpage (19) et une tension de seuil (VTH), et
une diminution de la fréquence dudit signal de modulation de largeur d'impulsion (Spwm) si la tension d'entrée (Vin) est inférieure à la tension de seuil (VTH).

2. Procédé selon la revendication 1, dans lequel ladite diminution de la fréquence du signal de modulation de largeur d'impulsion (Spwm) comprend une diminution de la fréquence d'un signal d'horloge (Sclk) destiné à cadencer le signal de modulation de largeur d'impulsion (Spwm).

3. Procédé selon la revendication 2, dans lequel ladite diminution est une division de la fréquence dudit signal d'horloge (Sclk) par deux.

4. Procédé selon l'une quelconque des revendications précédentes, dans lequel la tension de seuil (VTH) est choisie de façon à ce que lorsque la tension d'entrée (Vin) est inférieure à la tension de seuil (VTH), le régulateur de tension (19) fonctionne dans un mode à faible chute de tension.

5. Dispositif de réglage d'un signal de modulation de largeur d'impulsion destiné à piloter un régulateur de tension à découpage du type abaisseur de tension (19), comprenant
un module de comparaison (21) destiné à recevoir une tension d'entrée (Vin) dudit régulateur de tension à découpage (19) et une tension de seuil (VTH), et configuré pour comparer ladite tension d'entrée (Vin) et ladite tension de seuil (VTH), et
un module de contrôle (22, DM) destiné à diminuer la fréquence dudit signal de modulation de largeur d'impulsion (Spwm) si la tension d'entrée (Vin) est inférieure à la tension de seuil (VTH).

6. Dispositif selon la revendication 5, dans lequel le module de contrôle (22, DM) est configuré pour diminuer la fréquence du signal de modulation de largeur d'impulsion (Spwm) par une diminution de la fréquence d'un signal d'horloge (Sclk) destiné à cadencer ledit signal de modulation de largeur d'impulsion (Spwm).

7. Dispositif selon la revendication 6, dans lequel le module de contrôle (22) est configuré pour diminuer la fréquence du signal d'horloge (Sclk) par une division de la fréquence dudit signal d'horloge (Sclk) par deux.

8. Dispositif selon l'une quelconque des revendications 5 à 7, dans lequel la tension de seuil (VTH) est choisie de façon à ce que lorsque la tension d'entrée (Vin) est inférieure à la tension de seuil (VTH), le régulateur de tension (19) fonctionne dans un mode à faible chute de tension.

9. Source d'alimentation à découpage du type abaisseur de tension comprenant un dispositif de réglage d'un signal de modulation de largeur d'impulsion (20) selon l'une quelconque des revendications 5 à 8 et un régulateur de tension à découpage du type abaisseur de tension (19) piloté par ledit signal de modulation de largeur d'impulsion (Spwm).

10. Unité de gestion d'alimentation, comprenant au moins une source d'alimentation à découpage du type abaisseur de tension (18) selon la revendication 9.

11. Microcontrôleur incorporant une unité de gestion de l'alimentation (15) selon la revendication 10.

12. Appareil électronique tel qu'un appareil intelligent connecté, incorporant au moins un microcontrôleur (14) selon la revendication 11.
